# EUROPÄISCHE PATENTANMELDUNG

(11) **EP 1 182 408 A2**
(43) Veröffentlichungstag der Anmeldung: **27.02.2002**
(21) Anmeldenummer: 01114095.1
(22) Anmeldetag: 09.06.2001
(51) Int. Cl.: F24H 8/00

(54) **Brennwertheizgerät mit einem Wärmetauscher mit Abgas- und Kondensat-Sammelwanne und Vorrichtung zur Herstellung der Abgas- und Kondensat-Sammelwanne**

(30) Priorität: 23.08.2000 DE 10041258
(71) Anmelder: ROBERT BOSCH GMBH, 70442 Stuttgart (DE)
(72) Erfinder: Schmuker, Franz, 73117 Wangen (DE); Klosok, Jan, 71336 Waiblingen (DE); Eichgruen, Stefan, 73277 Owen (DE)

(57) **Zusammenfassung**

Die Erfindung betrifft ein Brennwertheizgerät im Sturzbrennerprinzip mit einer Brenngasführung von oben nach unten, bei dem in der Oberseite eines Guss-Wärmetauschers eine Brennkammer mit Brenner angeordnet ist und bei dem die Unterseite des Wärmetauschers mit einer Abgas- und Kondensat-Sammelwanne mit Kondensatausgang abgeschlossen ist und die Abgas- und Kondensat-Sammelwanne über einen allseitig geschlossenen Kanal in einen nach oben führenden Abgas-Anschluss übergeht. Der Teile- und Montageaufwand lässt sich dadurch mit reduzierten Materialkosten verringern, dass die Abgas- und Kondensat-Sammelwanne über den von einer Seitenwand der Abgas- und Kondensat-Sammelwanne ausgehenden Kanal direkt in den Abgas-Anschluss übergeht, wobei die Abgas- und Kondensat-Sammelwanne, der Kanal und der Abgas-Anschluss als ein einstückiges Kunststoff-Spritzgussanschlussteil ausgebildet ist, das mit angeformten Verbindungselementen mit der Unterseite des Guss-Wärmetauschers verbindbar ist und unterhalb des Abgas-Anschlusses mit einem angeformten Kondensatauslauf versehen ist. Ausserdem wird eine Vorrichtung zum Herstellen des erforderlichen Kunststoff-Spritzgussanschlussteils angegeben.

## Beschreibung

Die Erfindung betrifft ein Brennwertheizgerät im Sturzbrennerprinzip mit einer Brenngasführung von oben nach unten, bei dem in der Oberseite eines Guss-Wärmetauschers eine Brennkammer mit Brenner angeordnet ist und bei dem die Unterseite des Wärmetauschers mit einer Abgas- und Kondensat-Sammelwanne mit Kondensatausgang abgeschlossen ist und die Abgas- und Kondensat-Sammelwanne über einen allseitig geschlossenen Kanal in einen nach oben führenden Abgas-Anschluss übergeht und eine Vorrichtung zur Herstellung einer derartigen Abgas- und Kondensat-Sammelwanne.

Für Brennwertheizgeräte dieser Art werden vielfach im Sandguss-Verfahren hergestellte Abgas- und Kondensat-Sammelwannen am Wärmetauscher angebracht. Die Anbringung des Abgas-Anschlusses erfordert weitere, getrennt hergestellte Teile, die in zusätzlichem Montageaufwand mit der Abgas- und Kondensat-Sammelwanne verbunden werden müssen. Auch der Abgas-Anschluss besteht in der Regel aus Metall.

Es ist Aufgabe der Erfindung, den Teile- und Montageaufwand für ein Brennwertheizgerät der eingangs erwähnten Art zu reduzieren und damit die Herstellkosten, insbesondere für die Abgas- und Kondensat-Sammelwanne und den Abgas-Anschluss, zu senken.

Diese Aufgabe wird nach der Erfindung dadurch gelöst, dass die Abgas- und Kondensat-Sammelwanne über den von einer Seitenwand der Abgas- und Kondensat-Sammelwanne ausgehenden Kanal direkt in den Abgas-Anschluss übergeht, wobei die Abgas- und Kondensat-Sammelwanne, der Kanal und der Abgas-Anschluss als ein einstückiges Kunststoff-Spritzgussanschlussteil ausgebildet ist, das mit angeformten Verbindungselementen mit der Unterseite des Guss-Wärmetauschers verbindbar ist und unterhalb des Abgas-Anschlusses mit einem angeformten Kondensatauslauf versehen ist.

Mit diesem Kunststoff-Spritzgussanschlussteil werden der Teile- und Montageaufwand reduziert, da dieses in einem Arbeitsgang kostengünstig hergestellt werden kann. Dabei wird die Erkenntnis, dass der Kunststoff den auftretenden Temperaturen des Abgases in diesem Auslass-Bereich und dem anfallenden sauren Kondenswasser ohne Schwierigkeiten standhalten kann. Dafür stehen dem Fachmann eine Anzahl von geeigneten Kunststoff-Materialien zur Verfügung.

Ist dabei zusätzlich vorgesehen, dass die Abgas- und Kondensat-Sammelwanne einen zum Kondensatauslauf fallend geneigten Boden aufweist, der sich über den Kanal und den Abgas-Anschluss erstreckt und den angeformten, hülsenförmigen Kondensatauslauf trägt, dann fließt das in dem Kunststoff-Spritzgussanschlussteil angesammelte Kondenswasser über den Kondensat-Auslauf sicher ab.

Der Übergang von der Abgas- und Kondensat-Sammelwanne zum Abgas-Anschluss ist nach einer Ausgestaltung so ausgeführt, dass sich der an die Abgas- und Kondensat-Sammelwanne anschließende Kanal zum Abgas-Anschluss hin im Querschnitt verjüngt.

Ist nach einer weiteren Ausgestaltung vorgesehen, dass die Verbindungselemente an den freien Kanten der Seitenwände der Abgas- und Kondensat-Sammelwanne als Rastfedern angeformt sind, die in Rastaufnahmen in der Unterseite des Guss-Wärmetauschers einrastbar sind, dann kann das Kunststoff-Spritzgussanschlussteil ohne besondere Befestigungsmittel schnell und leicht mit dem Wärmetauscher verbunden werden.

Für die Herstellung des Kunststoff-Spritzgussanschlussteils ist eine Ausgestaltung von Vorteil, die dadurch gekennzeichnet ist, dass das Kunststoff-Spritzgussanschlussteil mit im Wesentlichen einheitlicher Wandstärke ausgebildet ist, wobei Stellen erhöhter Abmessung oder Stabilität eine doppelwandige Ausbildung vorgesehen ist und die Wandteile über Querwände befestigt sind.

Ein dichter Übergang zwischen Wärmetauscher und angebrachtem Kunststoff-Spritzgussanschlussteil wird einfach dadurch erreicht, dass in die dem Wärmetauscher zugekehrten freien Kanten der Seitenwände der Abgas- und Kondensat-Sammelwanne eine umlaufende Aufnahmenut für eine Dichtung eingeformt ist.

Die Erfindung gibt auch eine Ausgestaltung einer Vorrichtung zum Herstellen des erforderlichen Kunststoff-Spritzgussanschlussteils an, die dadurch gekennzeichnet ist, dass ein aus feststeckender Formhälfte und beweglicher Formhälfte bestehendes zweiteiliges Spritzgusswerkzeug mit den einander zugekehrten Konturen die Außen- und Innenkontur des Kunststoff-Spritzgussanschlussteils festlegt, und dass ein die Innenkontur des Kanals bestimmendes Formteil mit einem in der beweglichen Formhälfte über eine Auswerferplatte verstellbaren Auswerfer verbunden ist, von dem nach Öffnen des Spritzgusswerkzeuges und von der beweglichen Formhälfte freigelegtem Kunststoff-Spritzgussanschlussteil letzteres quer zur Verstellrichtung der beweglichen Formhälfte abnehmbar ist.

Die Ausrichtung des Kunststoff-Spritzgussanschlussteils wird so vorgenommen, dass das Kunststoff-Spritzgussanschlussteil mit Abgas- und Kondensat-Sammelwärme, Kanal und Abgas-Anschluss von oben nach unten aufeinanderfolgend in dem Spritzgusswerkzeug angeformt sind, und dass das den Kanal bestimmende Formteil mit dem Auswerfer verbunden ist, der bei geschlossenem Spritzgusswerkzeug einen an den Kanal anschliessenden Teil der Abgas- und Kondensat-Sammelwanne bestimmt, um die Entformung zu erleichtern.

Zur Bildung des geschlossenen Kanals zwischen Abgas- und Kondensat-Sammelwanne und Abgas-Anschluss ist vorgesehen, dass der Verstellweg der Auswerferplatte mit den Auswerfern größer ist als die in Bewegungsvorrichtung der beweglichen Formhälfte ausgerichtete, maximale Abmessung des Kunststoff-Spritzgussanschlussteils und dass die Abmessung der Abgas- und Kondensat-Sammelwanne vom Auswerfer mit dem Formteil zur abgekehrten Seitenwand derselben größer ist als die maximale Abmessung des Kanals quer zur Bewegungsrichtung der beweglichen Formhälfte.

Nach dem Öffnen des Spritzgusswerkzeuges kann das fertige Kunststoff-Spritzgussanschlussteil nach unten vom Formteil abfallen oder abgeschoben werden.

Die Anpassung des Spritzgusswerkzeuges an den Übergang vom Kanal zum Abgas-Anschluss lässt sich dadurch leichter vornehmen, dass das Formteil des Auswerfers mit einem Ende in die Innenaufnahme des Abgas-Anschlusses ragt und dass die bewegliche Formhälfte eine Aufnahme aufweist, in die bei geschlossenem Spritzgusswerkzeug dieses Ende formschlüssig eingeführt ist.

Die Erfindung wird anhand eines in der Zeichnung dargestellten Ausführungsbeispieles eines Brennwertheizgerätes und eines Spritzgusswerkzeuges zum Herstellen des dabei eingesetzten Kunststoff-Spritzgussanschlussteils näher erläutert. Es zeigen:
- Fig. 1: den prinzipiellen Aufbau eines- Brennwertheizgerätes mit im Schnitt dargestellten Kunststoff-Spritzgussanschlussteil und
- Fig. 2: ein zweiteiliges Spritzgusswerkzeug im geöffneten Zustand und hergestelltem Kunststoff-Spritzgussanschlussteil.

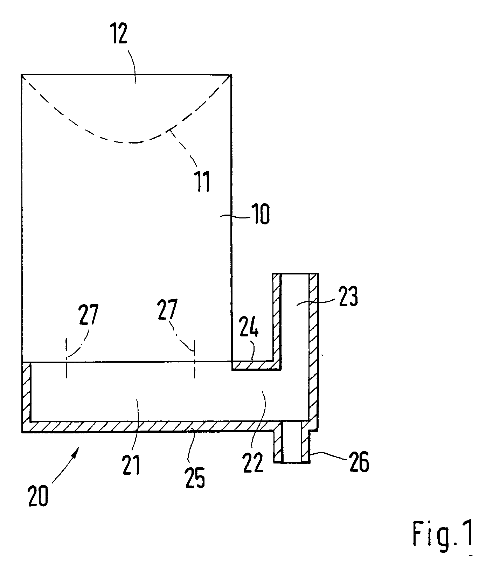

Wie Fig. 1 zeigt, wird bei einem Brennwertheizgerät in die Oberseite eines Guss-Wärmetauschers 10 bekannter Art durch eine eingesetzte, durchlöcherte Kammerscheibe 11, eine Brennkammber abgeteilt, in der ein Brenner, z.B. ein Porenbrenner, eingesetzt ist. Die bei der Verbrennung des zugeführten Gas-Luft-Gemisches entstehenden Brenngase passieren bei dem im Sturzbrennerprinzip ausgelegten Brennwertheizgerät den Guss-Wärmetauscher 10 von oben nach unten. Der Guss-Wärmetauscher 10 nimmt Wärme aus dem durchströmenden Brenngas auf und gibt diese an eine in den Guss-Wärmetauscher 10 fließende Flüssigkeit, z.B. Heizwasser, ab. Das abgekühlte Brenngas tritt an der Unterseite des Guss-Wärmetauschers 10 als Abgas aus.

Der Guss-Wärmetauscher 10 hat im Wesentlichen einen rechteckförmigen Querschnitt. Seine Unterseite ist mit einem Kunststoff-Spritzgussanschlussteil 20 abgeschlossen und mit dieser verbunden.

Das Kunststoff-Spritzgussanschlussteil 20 besteht aus einer Abgas- und Kondensat-Sammelwanne 21, an die sich an einer Seitenwand ein allseitig geschlossener Kanal 22 zu einem Abgas-Anschluss 23 anschliesst. Der Kanal 22 wird durch einen Teil des Bodens 25 des Kunststoff-Spritzgussanschlussteils 20 und eine Deckwand 24 gebildet. Unterhalb des Abgas-Anschlusses 23, der nach oben gerichtet und hülsenförmig ausgebildet ist, ist am Boden 25 ein ebenfalls hülsenförmigen Kondensatauslauf 26 angeformt. Der Boden 25 des Kunststoff-Spritzgussanschlussteils 20 ist zum Kondensatablauf 26 hin abfallend geneigt, so dass das in der Abgas- und Kondensat-Sammelwanne 21 angesammelte Kondenswasser leicht abfließen kann.

Die freien Kanten der Seitenwände der Abgas- und Kondensat-Sammelwanne 21, die sich an die Unterseite des Guss-Wärmetauschers 10 anschließen und an deren Querschnitt angepasst sind, tragen angeformte Rastfedern als Verbindungselemente 27, die in Rastaufnahmen des Guss-Wärmetauschers 10 einrastbar sind. Das Kunststoffspritzgussanschlussteil 20 kann daher ohne zusätzliche Befestigungsmittel mit dem Guss-Wärmetauscher 10 verbunden werden. Damit der Übergang zwischen dem Guss-Wärmetauscher 10 und der Abgas- und Kondensat-Sammelwanne 21 dicht ist, sind in die freien Stirnseiten der Stirnwände Aufnahmenuten für eine Dichtung eingeformt, die rahmenartig über den gesamten Unmfang verlaufen.

Das Kunststoff-Spritzgussanschlussteil 20 wird aus einem Kunststoff hergestellt, der den auftretenden Temperaturen des Abgases standhält und gegen das anfallende saure Kondenswasser resistent ist.

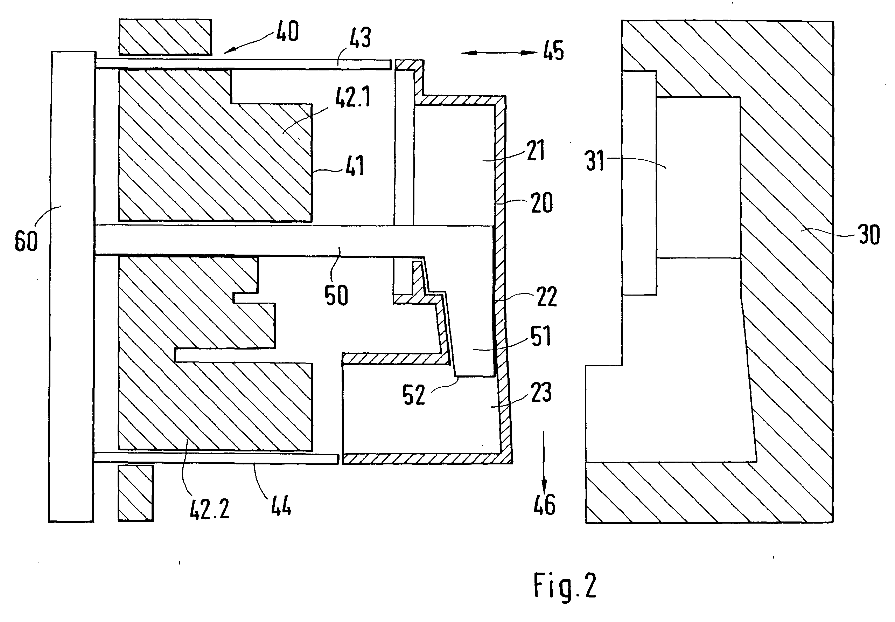

Wie der Teilschnitt nach Fig. 1 erkennen lässt, kann das Kunststoff-Spritzgussanschlussteil 20 durch die Deckwand 24, d.h. den geschlossenen Kanal 22, nicht ohne Weiteres durch ein zweiteiliges Spritzgusswerkzeug in der vertikalen Richtung nach Fig. 1 entformt werden. Das Spritzgusswerkzeug muss daher eine besondere Ausgestaltung erfahren, wie Fig. 2 zeigt.

In Fig. 1 zeigt die rechte Seite eine feststehende Formhälfte 30, in die die Aussenkontur des Kunststoff-Spritzgussanschlussteil als Ausformung 31 eingebracht ist. Die linke Seite zeigt die bewegliche Formhälfte 40, die in Pfeilrichtung 45 gegenüber der feststehenden Formhälte 30 verstellbar ist. Die bewegliche Formhälfte 40 bestimmt mit einer Abschlusskontur 41 die Innenkontur des Kunststoff-Spritzgussanschlussteils 20 bis auf den Kanal 22.

Den Kanalinnenraum definiert ein Formteil 51, das Teil eines Auswerfers 50 ist, der wie die Auswerfer 44 in der beweglichen Formhälfte 40 verstellbar und mit einer Auswerferplatte 60 verbunden ist. Das Formteil 51 verjüngt sich zum Abgas-Anschluss 23 hin. Das Kunststoff-Spritzgussanschlussteil 20 ist in das Spritzgusswerkzeug so eingeformt, das von oben nach unten die Abgas- und Kondensat-Sammelwanne 21, der Kanal 22 und der Abgas-Anschluss 23 aufeinander folgen. Das Formteil 51 kann sich auch teilweise in den Abgas-Anschluss 23 hinein erstrecken, wie das Ende 52 zeigt, um den Übergang zwischen dem Kanal 22 und dem Abgas-Anschluss 23 leichter gestalten zu können. Der in den Abgas-Anschluss 23 ragende Teil 42.2 der beweglichen Formhälfte 40 weist dann eine Aufnahme auf, die das Ende 52 des Formteils 51 formschlüssig aufnimmt.

Wie die Fig. 2 zeigt, muss nach dem Öffnen des Spritzgusswerkzeuges die Auswerferplatte 60 über die Auswerfer 44 und 50 das Kunststoff-Spritzgussanschlussteil 20 so weit verschieben, dass der von der beweglichen Formhälfte 40 mit den Teilbereichen 42.1 und 42.2 abgehoben ist und freiliegt, so dass es in Pfeilrichtung 46 vom Formteil 51 nach unten abfällt oder abgeschoben werden kann.

## Patentansprüche

1. Brennwertheizgerät im Sturzbrennerprinzip mit einer Brenngasführung von oben nach unten, bei dem in der Oberseite eines Guss-Wärmetauschers eine Brennkammer mit Brenner angeordnet ist und bei dem die Unterseite des Wärmetauschers mit einer Abgas- und Kondensat-Sammelwanne mit Kondensatausgang abgeschlossen ist und die Abgas- und Kondensat-Sammelwanne über einen allseitig geschlossenen Kanal in einen nach oben führenden Abgas-Anschluss übergeht,
**dadurch gekennzeichnet,**
**dass** die Abgas- und Kondensat-Sammelwanne (21) über den von einer Seitenwand der Abgas- und Kondensat-Sammelwanne (21) ausgehenden Kanal (22) direkt in den Abgas-Anschluss (23) übergeht, wobei die Abgas- und Kondensat-Sammelwanne (21), der Kanal (22) und der Abgas-Anschluss (23) als ein einstückiges Kunststoff-Spritzgussanschlussteil (20) ausgebildet ist, das mit angeformten Verbindungselementen (27) mit der Unterseite des Guss-Wärmetauschers (10) verbindbar ist und unterhalb des Abgas- Anschlusses (23) mit einem angeformten Kondensatauslauf (26) versehen ist.

2. Brennwertheizgerät nach Anspruch 1,
**dadurch gekennzeichnet,**
**dass** die Abgas- und Kondensat-Sammelwanne (21) einen zum Kondensatauslauf (26) fallend geneigten Boden (25) aufweist, der sich über den Kanal (22) und den Abgas-Anschluss (23) erstreckt und den angeformten, hülsenförmigen Kondensatauslauf (26) trägt.

3. Brennwertheizgerät nach Anspruch 1 oder 2,
**dadurch gekennzeichnet,**
**dass** sich der an die Abgas- und Kondensat-Sammelwanne (21) anschließende Kanal (22) zum Abgas-Anschluss (23) hin im Querschnitt verjüngt.

4. Brennwertheizgerät nach einem der Ansprüche 1 bis 3,
**dadurch gekennzeichnet,**
**dass** die Verbindungselemente (27) an den freien Kanten der Seitenwände der Abgas- und Kondensat-Sammelwanne (21) als Rastfedern angeformt sind, die in Rastaufnahmen in der Unterseite des Guss-Wärmetauschers (10) einrastbar sind.

5. Brennwertheizgerät nach einem der Ansprüche 1 bis 4,
**dadurch gekennzeichnet,**
**dass** das Kunststoff-Spritzgussanschlussteil (20) mit im Wesentlichen einheitlicher Wandstärke ausgebildet ist, wobei Stellen erhöhter Abmessung oder Stabilität eine doppelwandige Ausbildung vorgesehen ist und die Wandteile über Querwände befestigt sind.

6. Brennwertheizgerät nach einem der Ansprüche 1 bis 5,
**dadurch gekennzeichnet,**
**dass** in die dem Wärmetauscher (10) zugekehrten freien Kanten der Seitenwände der Abgas- und Kondensat-Sammelwanne (21) eine umlaufende Aufnahmenut für eine Dichtung eingeformt ist.

7. Vorrichtung zum Herstellen eines Kunststoff-Spritzgussanschlussteil nach einem oder mehreren Ansprüchen 1 bis 6,
**dadurch gekennzeichnet,**
**dass** ein aus feststeckender Formhälfte (30) und beweglicher Formhälfte (40) bestehendes zweiteiliges Spritzgusswerkzeug mit den einander zugekehrten Konturen (31 und 41) die Außen- und Innenkontur des Kunststoff-Spritzgussanschlussteils (20) festlegt, und
**dass** ein die Innenkontur des Kanals (22) bestimmendes Formteil (51) mit einem in der beweglichen Formhälfte (40) über eine Auswerferplatte (60) verstellbaren Auswerfer (50) verbunden ist, von dem nach Öffnen des Spritzgusswerkzeuges und von der beweglichen Formhälfte (40) freigelegtem Kunststoff-Spritzgussanschlussteil (20) letzteres quer zur Verstellrichtung der beweglichen Formhälfte (40) abnehmbar ist.

8. Vorrichtung nach Anspruch 7,
**dadurch gekennzeichnet,**
**dass** das Kunststoff-Spritzgussanschlussteil (20) mit Abgas- und Kondensat-Sammelwärme (21), Kanal (22) und Abgas-Anschluss (23) von oben nach unten aufeinanderfolgend in dem Spritzgusswerkzeug angeformt sind, und
**dass** das den Kanal (22) bestimmende Formteil (51) mit dem Auswerfer (50) verbunden ist, der bei geschlossenem Spritzgusswerkzeug einen an den Kanal (22) anschliessenden Teil der Abgas- und Kondensat-Sammelwanne (21) bestimmt.

9. Vorrichtung nach Anspruch 7 oder 8,
**dadurch gekennzeichnet,**
**dass** der Verstellweg der Auswerferplatte (60) mit den Auswerfern (43, 44, 50) größer ist als die in Bewegungsvorrichtung der beweglichen Formhälfte (40) ausgerichtete, maximale Abmessung des Kunststoff-Spritzgussanschlussteils (20).

10. Vorrichtung nach einem der Ansprüche 7 bis 9,
**dadurch gekennzeichnet,**
**dass** die Abmessung der Abgas- und Kondensat-Sammelwanne (21) vom Auswerfer (50) mit dem Formteil (51) zur abgekehrten Seitenwand derselben größer ist als die maximale Abmessung des Kanals (22) quer zur Bewegungsrichtung der beweglichen Formhälfte (40).

11. Vorrichtung nach einem der Ansprüche 7 bis 10,
**dadurch gekennzeichnet,**
**dass** das Formteil (51) des Auswerfers (50) mit einem Ende (52) in die Innenaufnahme des Abgas-Anschlusses (23) ragt und
**dass** die bewegliche Formhälfte (40) eine Aufnahme aufweist, in die bei geschlossenem Spritzgusswerkzeug dieses Ende (52) formschlüssig eingeführt ist.
